(19) Europäisches Patentamt / European Patent Office / Office européen des brevets

(11) **EP 4 572 116 A1**

(12) **EUROPEAN PATENT APPLICATION**
published in accordance with Art. 153(4) EPC

(43) Date of publication:
**18.06.2025 Bulletin 2025/25**

(21) Application number: **23851308.9**

(22) Date of filing: **19.05.2023**

(51) International Patent Classification (IPC):
**H02M 7/217** (2006.01)

(52) Cooperative Patent Classification (CPC):
Y02B 70/10

(86) International application number:
**PCT/CN2023/095345**

(87) International publication number:
**WO 2024/032078 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.08.2022 CN 202210968509**

(71) Applicant: **Ace Power and Technology Co.,Ltd Shanghai 201206 (CN)**

(72) Inventor: **YAN, Chao Shanghai 201206 (CN)**

(74) Representative: **2SPL Patentanwälte PartG mbB Landaubogen 3 81373 München (DE)**

(54) **CIRCUIT CONTROL METHOD AND UNIT, AND APPARATUS**

(57) The present application provides a circuit control method and unit, and an apparatus. The method is applied to a power supply apparatus; the power supply apparatus comprises a switch boost circuit; and the switch boost circuit comprises at least one power semiconductor device. The circuit control method comprises: collecting an input signal and an output signal of the switch boost circuit; according to the input signal, the output signal, and circuit information of the switch boost circuit, determining, as a target control solution, a control solution having the highest electric energy conversion efficiency from a plurality of control solutions to be selected, wherein the control solutions to be selected comprise control solutions corresponding to each of a plurality of working modes of the switch boost circuit for the at least one power semiconductor device; and controlling on and off of the at least one power semiconductor device according to the target control solution. According to the present application, the control solution of a power semiconductor device can be adjusted in time, thereby improving the overall electric energy conversion efficiency of the circuit.

```
┌─────────────────────────────────────────────────────────────┐
│ Collecting an input signal and an output signal of the       │── S100
│ switching boost circuit                                      │
└─────────────────────────────────────────────────────────────┘
                            │
                            ▼
┌─────────────────────────────────────────────────────────────┐
│ Determining, according to the input signal, the output       │
│ signal, and circuit information of the switching boost        │
│ circuit, a control scheme with a highest electrical energy    │── S200
│ conversion efficiency as a target control scheme from a       │
│ plurality of control schemes to be selected, wherein the      │
│ control schemes to be selected include a control scheme       │
│ corresponding to each of a plurality of working modes of      │
│ the switching boost circuit for the at least one power        │
│ semiconductor device                                         │
└─────────────────────────────────────────────────────────────┘
                            │
                            ▼
┌─────────────────────────────────────────────────────────────┐
│ Controlling conduction and shutdown of the at least one       │── S300
│ power semiconductor device according to the target control    │
│ scheme                                                       │
└─────────────────────────────────────────────────────────────┘
```

FIG. 1

**Description**

CROSS-REFERENCE TO RELATED APPLICATION

The present disclosure claims the priority of Chinese patent application No. 202210968509.X filed on August 12, 2022, which is incorporated herein by reference.

TECHNICAL FIELD

The present disclosure relates to the technical field of the control of power semiconductor devices, and particularly to a circuit control method and unit, and an apparatus.

BACKGROUND

At present, as a major energy carrier, electricity needs to be converted from AC to DC, from DC to AC, from a high voltage to a low voltage, etc. Thus, the conversion efficiency of electrical energy will largely determine the use efficiency of electricity.

In which, the power semiconductor device plays a pivotal role in the electricity conversion process of a switching boost circuit, and it is also the key to the efficiency loss in the conversion process. The losses of the power semiconductor device are mainly classified into two categories, i.e., a conduction loss and a switching loss. These two losses are closely related to the load and the control mode of the power semiconductor device. Different control modes of the power semiconductor device can produce completely different switching losses, while influencing the conduction loss to a certain extent, thereby influencing the conversion efficiency of electrical energy in the switching boost circuit.

SUMMARY

An object of the present disclosure is to provide a circuit control method, which can determine a control scheme with a highest electrical energy conversion efficiency of a power semiconductor device by collecting an input signal and an output signal of a switching boost circuit in real time, and can adjust the control scheme of the power semiconductor device in real time according to the input signal and the output signal, so as to improve the electrical energy conversion efficiency of the whole circuit. Another object of the present disclosure is to provide a circuit control unit. Still another object of the present disclosure is to provide a power source apparatus. Still another object of the present disclosure is to provide a computer device. Still another object of the present disclosure is to provide a readable medium. Still another object of the present disclosure is to provide a computer program product.

In order to achieve the above objects, an aspect of the present disclosure discloses a circuit control method which is applied to a power source apparatus, the power source apparatus comprising a switching boost circuit that comprises at least one power semiconductor device, and the circuit control method comprising:

collecting an input signal and an output signal of the switching boost circuit;
determining, according to the input signal, the output signal, and circuit information of the switching boost circuit, a control scheme with a highest electrical energy conversion efficiency as a target control scheme from a plurality of control schemes to be selected, wherein the control schemes to be selected comprise a control scheme corresponding to each of a plurality of working modes of the switching boost circuit for the at least one power semiconductor device; and
controlling conduction and shutdown of the at least one power semiconductor device according to the target control scheme.

Optionally, the determining, according to the input signal, the output signal, and circuit information of the switching boost circuit, a control scheme with a highest electrical energy conversion efficiency as a target control scheme from a plurality of control schemes to be selected comprises:

calculating, according to the input signal, the output signal and the circuit information of the switching boost circuit, circuit losses of the switching boost circuit under the plurality of control schemes to be selected, wherein the circuit losses comprise an inductor core loss, an inductor winding loss, a switching transistor turn-on loss, a switching transistor turn-off loss, a switching transistor on-state loss, a rectifier diode on-state loss and a rectifier diode switching loss;
determining the electrical energy conversion efficiency of each of the control schemes to be selected according to the circuit loss and the output signal thereof; and

determining a control scheme with a highest electrical energy conversion efficiency as a target control scheme from the plurality of control schemes to be selected.

Optionally, the plurality of working modes comprise a discontinuous mode and/or a continuous mode;

the control schemes to be selected comprise a control scheme corresponding to each of the working modes among the discontinuous mode and/or the continuous mode of the switching boost circuit for the at least one power semiconductor device;
the control scheme corresponding to the continuous mode for the at least one power semiconductor device comprises a continuous conduction mode control scheme;
the control scheme corresponding to the discontinuous mode for the at least one power semiconductor device comprises an N-th valley discontinuous conduction mode control scheme, where N comprises at least one positive integer greater than or equal to 1.

Optionally, the method comprises:
when the power of the switching boost circuit is greater than or equal to a first preset power, the plurality of control schemes to be selected comprise the continuous conduction mode control scheme and the N-th valley discontinuous conduction mode control scheme.

Optionally, the method comprises:
when the power of the switching boost circuit is less than or equal to a second preset power, the plurality of control schemes to be selected comprise an M-th valley discontinuous conduction mode control scheme, wherein the second preset power is less than the first preset power, and M comprises at least one positive integer greater than or equal to a preset value.

Optionally, collecting an input signal and an output signal of the switching boost circuit comprises:
collecting an input signal and an output signal of the switching boost circuit at an interval of one or more preset control cycles.

Optionally, the method comprises: pre-forming corresponding relationships between different input signals and output signals and the plurality of control schemes.

The present disclosure further discloses a circuit control unit which is applied to a power source apparatus, the power source apparatus comprising a switching boost circuit that comprises at least one power semiconductor device, and the circuit control unit comprising:

a signal collection module configured to collect an input signal and an output signal of the switching boost circuit;
a control adjustment module configured to determine, according to the input signal, the output signal, and circuit information of the switching boost circuit, a control scheme with a highest electrical energy conversion efficiency as a target control scheme from a plurality of control schemes to be selected, wherein the control schemes to be selected include a control scheme corresponding to each of a plurality of working modes of the switching boost circuit for the at least one power semiconductor device; and
a switching control module configured to control conduction and shutdown of the at least one power semiconductor device according to the target control scheme.

The present disclosure further discloses a power source apparatus, comprising a switching boost circuit and the above circuit control unit.

The present disclosure further discloses a computer device, comprising a memory, a processor and a computer program stored in the memory and runnable in the processor, wherein
when executing the program, the processor implements the above method.

The present disclosure further discloses a computer-readable medium which stores a computer program, wherein
when execute by a processor, the computer program implements the above method.

The present disclosure further discloses a computer program product, comprising a computer program which, when executed by a processor, implements the above method.

In the present disclosure, the control method of the switching boost circuit collects an input signal and an output signal of the switching boost circuit; determines, according to the input signal, the output signal, and circuit information of the switching boost circuit, a control scheme with a highest electrical energy conversion efficiency as a target control scheme from a plurality of control schemes to be selected, wherein the control schemes to be selected include a control scheme corresponding to each of a plurality of working modes of the switching boost circuit for the at least one power semiconductor device; and controls conduction and shutdown of the at least one power semiconductor device according to the target control scheme. Therefore, the present disclosure can collect the input signal and output signal of the switching boost circuit in real time; determine, according to the input signal and output signal of the switching boost circuit, the target control scheme with the highest electrical energy conversion efficiency from the plurality of control schemes to be selected; and control conduction and shutdown of the at least one power semiconductor device in the switching boost circuit according to the target control scheme. Therefore, according to the change of the input signal and output signal of the switching boost circuit, the present disclosure can calculate the electrical energy conversion efficiency of the control scheme corresponding to each of the plurality of working modes of the switching boost circuit for the power semiconductor device in the switching boost circuit, select the control scheme with the highest electrical energy conversion efficiency as the target control scheme, determine an optimal control scheme of the power semiconductor device in real time, reduce the conduction loss and the switching loss of the power semiconductor device, and improve the electrical energy conversion efficiency of the whole switching boost circuit.

BRIEF DESCRIPTION OF THE DRAWING(S)

In order to explain the technical solutions in the embodiments of the present disclosure or in the prior art more clearly, the drawings to be used the description of the embodiments or the prior art will be briefly introduced below. Obviously, the drawings involved in the following description only illustrate some embodiments of the present disclosure, and those of ordinary skill in the art can obtain other drawings from them without paying any creative effort.

FIG. 1 illustrates a flowchart of a specific embodiment of a control method of a power semiconductor device in a switching boost circuit of the present disclosure;
FIGS. 2 to 5 illustrate schematic diagrams of a switching boost circuit in a specific embodiment of a control method of a power semiconductor device in the switching boost circuit of the present disclosure;
FIG. 6 illustrates a flowchart of a specific embodiment S200 of a control method of a power semiconductor device in a switching boost circuit of the present disclosure;
FIGS. 7 to 10 illustrates schematic diagrams of a control scheme in a specific embodiment of a control method of a power semiconductor device in a switching boost circuit of the present disclosure;
FIG. 11 illustrates a flowchart of a specific embodiment S000 of a control method of a power semiconductor device in a switching boost circuit of the present disclosure;
FIG. 12 illustrates a structural diagram of a specific embodiment of a circuit control unit of the present disclosure;
FIG. 13 illustrates a structural diagram of a computer device suitable for implementing an embodiment of the present disclosure.

DESCRIPTION OF EMBODIMENTS

The technical solutions in the embodiments of the present disclosure will be clearly and completely described below with reference to the drawings for the embodiment of the present disclosure. Obviously, those described are only a part, rather than all, of the embodiments of the present disclosure. Based on the embodiments in the present disclosure, any other embodiment obtained by those of ordinary skill in the art without paying any creative effort should fall within the protection scope of the present disclosure.

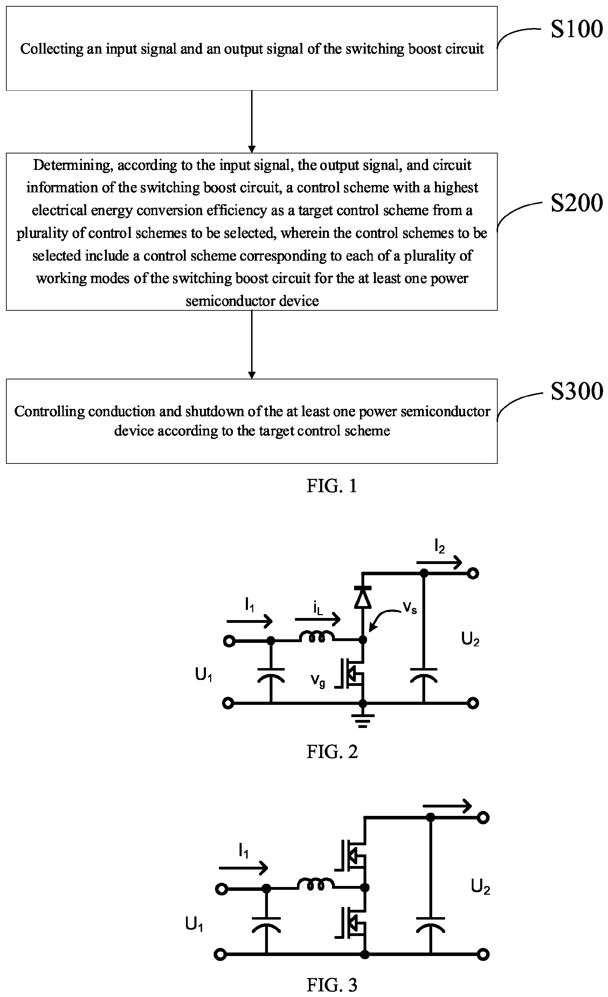

According to an aspect of the present disclosure, the embodiment discloses a circuit control method which is applied to a power source apparatus, wherein the power source apparatus includes a switching boost circuit that includes at least one power semiconductor device. As illustrated in FIG. 1, in the embodiment, the method includes:

S100: collecting an input signal and an output signal of the switching boost circuit; S200: determining, according to the input signal, the output signal, and circuit information of the switching boost circuit, a control scheme with a highest electrical energy conversion efficiency as a target control scheme from a plurality of control schemes to be selected, wherein the control schemes to be selected include a control scheme corresponding to each of a plurality of working modes of the switching boost circuit for the at least one power semiconductor device; and

S300: controlling conduction and shutdown of the at least one power semiconductor device according to the target control scheme.

In the present disclosure, the control method of the switching boost circuit collects an input signal and an output signal of the switching boost circuit; determines, according to the input signal, the output signal, and circuit information of the switching boost circuit, a control scheme with a highest electrical energy conversion efficiency as a target control scheme from a plurality of control schemes to be selected, wherein the control schemes to be selected include a control scheme corresponding to each of a plurality of working modes of the switching boost circuit for the at least one power semiconductor device; and controls conduction and shutdown of the at least one power semiconductor device according to the target control scheme. Therefore, the present disclosure can collect the input signal and output signal of the switching boost circuit in real time; determine, according to the input signal and output signal of the switching boost circuit, the target control scheme with the highest electrical energy conversion efficiency from the plurality of control schemes to be selected; and control conduction and shutdown of the at least one power semiconductor device in the switching boost circuit according to the target control scheme. Therefore, according to the change of the input signal and output signal of the switching boost circuit, the present disclosure can calculate the electrical energy conversion efficiency of the control scheme corresponding to each of the plurality of working modes of the switching boost circuit for the power semiconductor device in the switching boost circuit, select the control scheme with the highest electrical energy conversion efficiency as the target control scheme, determine an optimal control scheme of the power semiconductor device in real time, reduce the conduction loss and the switching loss of the power semiconductor device, and improve the electrical energy conversion efficiency of the whole switching boost circuit.

Optionally, the input signal and output signal of the switching boost circuit specifically include an input voltage, an input current, an output voltage and an output current of the switching boost circuit.

Specifically, the input current, the input voltage, the output current, the output voltage and other electrical signals of the switching boost circuit can be collected by a collection circuit or a collection apparatus in the power source apparatus.

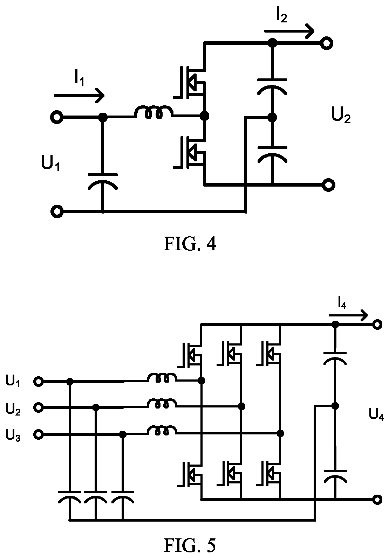

As illustrated in FIGS. 2 to 5, the four boost circuits illustrated in FIGS. 2 to 5 are typical switching boost circuits. The circuit control method of the present disclosure is applicable to the boost circuits illustrated in FIGS. 2 to 5 and other multi-phase boost circuits or switching boost circuits of other structures, which are only exemplified here and are not limited in the present disclosure. In which, an input voltage and an output voltage of the switching boost circuit in FIGS. 2 to 4 are U1 and U2, respectively, an input current and an output current are I1 and I2, respectively, an inductive current at an input side is iL, a voltage between a drain D and a source S of a field effect transistor is Vs, and a threshold voltage of the field effect transistor is Vg. The switching boost circuit in FIG. 5 is a boost circuit with three-phase AC input, with input voltages of U1, U2 and U3, an output voltage of U4 and an output current of I4.

The input voltage and the input current at an input end of the switching boost circuit should be subjected to an electrical energy conversion by the switching boost circuit to obtain an output voltage and an output current at an output end. For example, the boost circuit may boost the input voltage at the input end to obtain a higher output voltage, so as to provide the higher output voltage to a load connected to the output end.

In which, the output voltage and the output current of the switching boost circuit are determined by the load connected to the output end, and the input voltage at the input end of the switching boost circuit is in a stable state. The voltage and current of each component in the switching boost circuit may be obtained from the output voltage, the output current, the input voltage and the circuit information of the switching boost circuit, and then the electrical energy conversion efficiency of the switching boost circuit may be determined. Therefore, the input voltage, the output current and the output voltage of the current switching boost circuit at present can be collected, and the electrical energy conversion efficiencies of the whole switching boost circuit under different control schemes of the power semiconductor device can be determined according to the circuit information of the switching boost circuit at present.

In which, the circuit information of the switching boost circuit may include a circuit topology and electrical parameters of all components in the circuit, where the electrical parameters include, but are not limited to, a resistance value of a resistor, a capacitance value of a capacitor, and a threshold voltage of a switching transistor. The power semiconductor device in the switching boost circuit usually includes switching elements, such as a field effect transistor, a triode and a diode, or other components of the switching transistor, which are only exemplified here. In which, the field effect transistor may be a junction field effect transistor (JFET) or an insulated gate field effect transistor (MOSFET), both of which may adopt a P channel or an N channel, and the MOSFET may be of either an enhancement type or a depletion type.

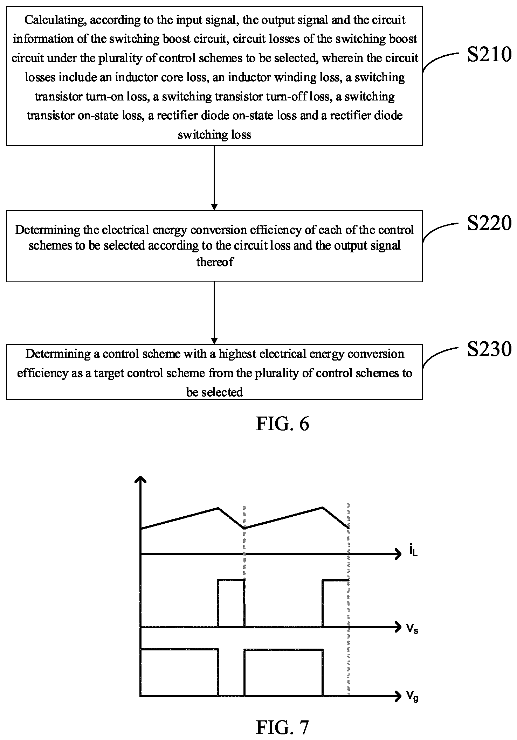

In an optional embodiment, as illustrated in FIG. 6, the S200 of determining, according to the input signal, the output signal, and circuit information of the switching boost circuit, a control scheme with a highest electrical energy conversion efficiency as a target control scheme from a plurality of control schemes to be selected specifically includes:

S210: calculating, according to the input signal, the output signal and the circuit information of the switching boost circuit, circuit losses of the switching boost circuit under the plurality of control schemes to be selected, wherein the circuit losses include an inductor core loss, an inductor winding loss, a switching transistor turn-on loss, a switching transistor turn-off loss, a switching transistor on-state loss, a rectifier diode on-state loss and a rectifier diode switching loss;

S220: determining the electrical energy conversion efficiency of each of the control schemes to be selected according to the circuit loss and the output signal thereof; and

S230: determining a control scheme with a highest electrical energy conversion efficiency as a target control scheme from the plurality of control schemes to be selected.

Specifically, it can be understood that taking the boost DCDC switching boost circuit in FIG. 2 as an example, in order to keep the steady-state operation of the switching boost circuit, i.e., in order to keep the output voltage and the output current being stable, under the given circuit topology and the component parameters of the switching boost circuit, there are various possible switching behaviors of the power semiconductor devices such as the field effect transistor and the triode, and there are feasible control schemes with different conduction and shutdown time. Therefore, it is necessary to collect the input signal and the output signal of the switching boost circuit in real time, determine the electrical energy conversion efficiencies of the switching boost circuit under different control schemes according to the input signal, the output signal and the circuit information of the switching boost circuit, determine the control scheme with the highest electrical energy conversion efficiency as the target control scheme, and adjust the control scheme of conduction and shutdown of the power semiconductor device in the switching boost circuit in real time through the target control scheme, so as to reduce the loss of the power semiconductor device and optimize the efficiency of the switching boost circuit.

The power devices in the switching boost circuit usually include an inductor, a diode, a switching transistor, etc. These power devices will cause the energy loss when the switching boost circuit performs the electrical energy conversion of the input current and the input voltage. Therefore, the circuit loss of the switching boost circuit under each control scheme can be calculated, and the electrical energy conversion efficiency of the switching boost circuit can be obtained by combining the output voltage and the output current of the switching boost circuit.

Specifically, the existing switching boost circuit usually includes an inductor, a switching transistor and a rectifier diode, so for the circuit loss, it is necessary to consider an inductor core loss, an inductor winding loss, a switching transistor turn-on loss, a switching transistor turn-off loss, a switching transistor on-state loss, a rectifier diode on-state loss and a rectifier diode switching loss. In which, the switching transistor turn-on loss the involved in the present disclosure includes at least one of a triode turn-on loss, a field effect transistor turn-on loss, or a turn-on loss of any other switching transistor; the switching transistor turn-off loss includes at least one of a triode turn-off loss, a field effect transistor turn-off loss, or a turn-off loss of any other switching transistor; the switching transistor on-state loss includes at least one of a triode on-state loss, a field effect transistor on-state loss, or an on-state loss of any other switching transistor. In a specific example, the electrical energy conversion efficiency of the boost DCDC switching boost circuit may be calculated by the following formula:

$$\eta = I2U2/(I2U2 + Pcore + Pwd + PM\_on + PM\_off + PM\_con + PD\_con + PD\_sw)$$

where $\eta$ represents an electrical energy conversion efficiency, I2 represents an output current, U2 represents an output voltage, Pcore represents an inductor core loss, Pwd represents an inductor winding loss, PM_on represents a switching transistor turn-on loss, PM_off represents a switching transistor turn-off loss, PM_con represents a switching transistor on-state loss, PD_con represents a rectifier diode on-state loss, and PD_sw represents a rectifier diode switching loss.

It should be noted that the circuit information of the switching boost circuit includes electrical parameters of the power semiconductor devices and a circuit topology describing connection relationships among the devices in the circuit. The output signal may be determined according to the load connected to the output end of the switching boost circuit, current and voltage information of each of the power semiconductor devices may be obtained by combining the input signal and the circuit topology, and then the corresponding losses may be obtained according to the electrical parameters and the current and voltage information of each of the power semiconductor devices. The detailed calculation process of the losses of the inductor, the diode and the switching transistor is common knowledge in the art, and can be calculated by those skilled in the art according to the actual conditions, which will not be repeated here.

Of course, in other embodiments, for the calculation of the electrical energy conversion efficiency, it is necessary to determine the circuit loss according to the actual circuit information of the switching booster circuit, and then obtain the corresponding electrical energy conversion efficiency according to the circuit loss, the output voltage and the output current. Those skilled in the art can determine the specific calculation formula of the circuit loss according to the actual circuit information of the switching booster circuit, which is not limited in the present disclosure.

In an optional embodiment, the plurality of working modes include a discontinuous mode and/or a continuous mode, and the control schemes to be selected include a control scheme corresponding to each of the working modes among the discontinuous mode and/or the continuous mode of the switching boost circuit for the at least one power semiconductor device. The control scheme corresponding to the continuous mode for the at least one power semiconductor device includes a continuous conduction mode control scheme. The control scheme corresponding to the discontinuous mode for the at least one power semiconductor device includes an N-th valley discontinuous conduction mode control scheme, where N includes at least one positive integer greater than or equal to 1.

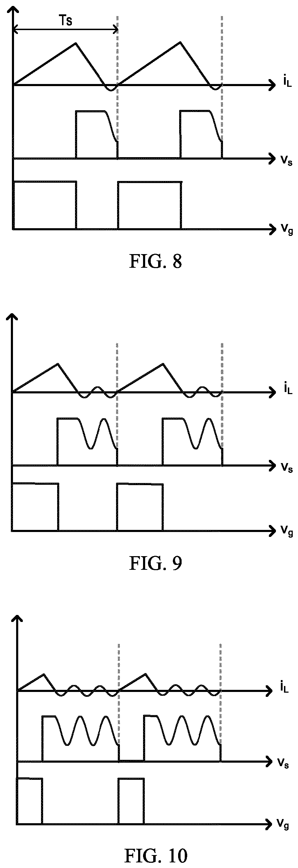

Specifically, it can be understood that the switching circuit may be in different working modes, such as the discontinuous mode, the continuous mode and a boundary/borderline mode. For the switching boost circuit, the control schemes of the discontinuous mode and the continuous mode are optional. In which, the control scheme of the continuous mode includes a Continuous Conduction Mode (CCM) control scheme, i.e., an inductive current continuous control scheme. For example, FIG. 7 illustrates a CCM control scheme of a boost DCDC switching boost circuit. The control scheme of the discontinuous mode includes an N-th Discontinuous Conduction Mode (DCM) control scheme, where N includes at least one positive integer greater than or equal to 1. Specifically, FIG. 8 illustrates a first valley conduction DCM control scheme of a boost DCDC switching boost circuit, while realizing a resonance between a junction capacitance and an input inductance of the switching transistor (e.g., MOSFET) in the DCM, wherein when the voltage Vs of the MOSFET resonates to a lowest point, the MOSFET is turned on again to achieve the minimum turn-on loss. FIGS. 9 and 10 illustrate second and third valley conduction DCM control schemes of a boost DCDC switching boost circuit, respectively, wherein a junction capacitance and an input inductance of an MOSFET resonate for a second time and a third time respectively, and the MOSFET is also turned on again when the voltage Vs of the MOSFET resonates to a lowest point.

In an optional embodiment, when the power of the switching boost circuit is greater than or equal to a first preset power, the plurality of control schemes to be selected include the continuous conduction mode control scheme and the N-th valley discontinuous conduction mode control scheme.

Specifically, the N-th valley discontinuous conduction mode control scheme includes a first valley discontinuous conduction mode control scheme, a second valley discontinuous conduction mode control scheme, a third valley discontinuous conduction mode control scheme, or more than third valley discontinuous conduction mode control scheme.

It can be understood that generally, the load decreases as the number of times of resonances increases, because as the load decreases, the rising time and the falling time of the inductive current decreases correspondingly, while the switching frequency increases as the number of times of resonances decreases, and the simplex control scheme is not conducive to the efficiency improvement. For example, for the boost circuit with three-phase AC input as illustrated in FIG. 5, the real-time values of the voltage and the current at the input side change periodically as time elapses. Usually, for the circuit topology of sine wave input voltage and input current, when the voltage phase is small, the current and the input real-time power are low, so a DCM valley turn-on control scheme with multiple resonances will be more used; when the phase of the input voltage increases, the input voltage and current increases accordingly and the number of times of DCM resonances decreases; and when the real-time power is increasingly higher, a DCM half-resonant (i.e., the first valley discontinuous conduction mode control scheme) may be used or the CCM control scheme may be directly used to achieve the efficiency optimization.

Therefore, in the optional embodiment, when the power of the switching boost circuit is greater than or equal to the first preset power, the power of the switching boost circuit is large, and the continuous conduction mode control scheme and the N-th valley discontinuous conduction mode control scheme may be considered as the control schemes to be selected.

Optionally, the first preset power may be selected to be 50% of a maximum power of the switching boost circuit. For example, in a specific example, when the maximum power of the switching boost circuit is 10 kw, the first preset power may be set to 5 kw. Based on the input signal and the output signal of the switching boost circuit, the current power of the switching boost circuit may be determined. If the current power of the switching boost circuit is greater than or equal to 5 kw, the optional control schemes include the CCM control scheme and the N-th valley DCM control scheme.

Optionally, when the power of the switching boost circuit is greater than or equal to the first preset power, the number of times of resonances decreases as the power increases. Therefore, the value of N may be set, so as to narrow the selection range of the optional control schemes, eliminate the control schemes with low electrical energy conversion efficiencies, and obtain more targeted optional control schemes, thereby reducing the calculation amount on the basis that the electrical energy conversion efficiency of the switching boost circuit can be ensured, and improving the efficiency of determining the control scheme of the power semiconductor device in real time. For example, when the power of the switching boost circuit is greater than or equal to the first preset power, N may be set to be less than or equal to 3, so as to determine an optional control scheme range that is more in line with the power of the current switching boost circuit. For example, in a specific example, when the maximum power of the switching boost circuit is 10 kw, the first preset power may be set to 5 kw, and N may be set to 3. Based on the input signal and the output signal of the switching boost circuit, the current power of the switching boost circuit can be determined. If the current power of the switching boost circuit is more than 5 kw, the optional control schemes include a CCM control scheme, a first valley DCM control scheme, a second valley DCM control scheme and a third valley DCM control scheme.

Of course, in other embodiments, the first preset power and the corresponding optional control scheme may be determined according to the actual conditions such as the input signal and the load of the switching boost circuit, which are not limited in the present disclosure.

In an optional embodiment, when the power of the switching boost circuit is less than or equal to a second preset power, the plurality of control schemes to be selected include an M-th valley discontinuous conduction mode control scheme, wherein the second preset power is less than the first preset power, and M includes at least one positive integer greater than or equal to a preset value.

Specifically, it can be understood that when the power of the switching boost circuit is small, for example, when the input signal of the switching boost circuit is a sine wave, the real-time power input to the switching boost circuit is small if the input signal of the sine wave is at a zero crossing point, and the DCM valley turn-on control scheme with multiple resonances will be more used. Therefore, when the power of the switching boost circuit is less than or equal to the second preset power, the electrical energy conversion efficiency of the CCM control scheme is generally not high, so the CCM control scheme is not considered, and only the discontinuous mode control scheme is considered.

Optionally, the second preset power may be selected to 30% of the maximum power of the switching boost circuit.

For example, in a specific example, when the maximum power of the switching boost circuit is 10 kw, the second preset power may be set to 3 kw. Based on the input signal and the output signal of the switching boost circuit, the current power of the switching boost circuit can be determined. If the current power of the switching boost circuit is less than or equal to 3 kw, the optional control schemes include an M-th valley DCM control scheme.

Optionally, when the power of the switching boost circuit is less than or equal to the second preset power, the number of times of resonances increases as the power increases. Therefore, a preset value may be set, so as to narrow the selection range of the optional control schemes, eliminate the control schemes with low electrical energy conversion efficiencies, and obtain more targeted optional control schemes, thereby reducing the calculation amount on the basis that the electrical energy conversion efficiency of the switching boost circuit can be ensured, and improving the efficiency of determining the control scheme of the power semiconductor device in real time. For example, when the power of the switching boost circuit is less than or equal to the second preset power, the preset value may be set to 3, so as to determine an optional control scheme range that is more in line with the power of the current switching boost circuit. For example, in a specific example, when the maximum power of the switching boost circuit is 10 kw, the second preset power may be set to 3 kw, and the preset value may be set to 3. Based on the input signal and the output signal of the switching boost circuit, the current power of the switching boost circuit can be determined. If the current power of the switching boost circuit is less than or equal to 3 kw, the optional control schemes include an M-th DCM control scheme, wherein M includes at least one positive integer greater than or equal to a preset value, such as a third valley DCM control scheme, a fourth valley DCM control scheme, a fifth valley DCM control scheme, a sixth valley DCM control scheme, or the like.

Of course, in other embodiments, the second preset power and the corresponding optional control scheme may be determined according to the actual conditions such as the input signal and the load of the switching boost circuit, which are not limited in the present disclosure.

In an optional embodiment, when the power of the switching boost circuit is greater than the second preset power and less than the first preset power, the plurality of control schemes to be selected may include an X-th valley discontinuous conduction mode control scheme. Optionally, when N is less than M, X may be set to be greater than or equal to N and less than or equal to M. For example, in a specific example, the second predetermined power is 30% of the maximum power of the switching boost circuit, the first predetermined power is 70% of the maximum power of the switching boost circuit, N includes at least one positive integer greater than or equal to 1 and less than 3, and M includes at least one positive integer greater than 4, then X may be selected as 3 and 4, that is, the plurality of control schemes to be selected may include a third valley discontinuous conduction mode control scheme and a fourth valley discontinuous conduction mode control scheme. In other embodiments, those skilled in the art may select the control schemes corresponding to different power of the switching boost circuit according to the actual conditions, which are not limited in the present application

In an optional embodiment, the step S100 of collecting an input signal and an output signal of the switching boost circuit specifically includes:

collecting an input signal and an output signal of the switching boost circuit at an interval of one or more preset control cycles.

Specifically, a control cycle for collecting the input signal and the output signal of the switching boost circuit may be predetermined, the input signal and the output signal may be collected at an interval of one control cycle, and the control scheme of the power semiconductor device may be redetermined. It is also possible to collect the input signal and the output signal at an interval of a plurality of control cycles, and redetermine the control scheme of the power semiconductor device, so as to adjust the control scheme of the power semiconductor device in time according to the actual input signal of the switching boost circuit, thereby optimizing the continuous power conversion efficiency of the entire switching boost circuit. In addition, the control scheme of the power semiconductor device is adjusted periodically by setting the control cycle, so that the control scheme can be adjusted in a targeted manner, and the problem of high energy consumption caused by the continuous adjustment can be avoided.

In which, the interval of the control cycle may be less than, greater than or equal to a switching cycle of the power semiconductor device, and those skilled in the art may set the control cycle according to actual needs, which is not limited in the present application

In an optional embodiment, the method further includes a step S000 of pre-forming corresponding relationships between different input signals and output signals and the plurality of control schemes.

Specifically, it can be understood that under the condition that the circuit information of the switching boost circuit is given, for the input signals and the output signals of different input voltages, output voltages and output currents, the electrical energy conversion efficiencies of the switching boost circuit under different control schemes of the power semiconductor device may be predetermined for each input signal and output signal, the control scheme with the highest electrical energy conversion efficiency may be determined, and corresponding relationships between different input signals and output signals and the plurality of control schemes may be formed by making different input signals and output signals be corresponding to the corresponding control scheme with the highest electrical energy conversion efficiency. Therefore, in practical applications, when the input signal and the output signal of the switching boost circuit are collected in real time, the control scheme corresponding to the collected input signal and output signal can be found from the above corresponding relationships, that is, the target control scheme can be obtained. In the optional embodiment, the response speed of real-time determination and adjustment of the control scheme of the power semiconductor device can be improved by presetting the corresponding relationships between the input signals and the output signals and the control schemes.

In one or more embodiments, a lookup table may be formed by associating the input voltages and the output signals of the output voltages and the output currents under several typical load conditions, as two dimensions, with the control schemes. In practical applications, according to the collected input voltage, output voltage and output current of the switching boost circuit, a corresponding control scheme may be found as the target control scheme directly from the lookup table, so as to control conduction and shutdown of the power semiconductor device.

In other embodiments, in order to determine the target control scheme under any input signal and output signal, the determined corresponding relationships between different input signals and output signals and the plurality of control schemes may be further interpolated, and then a corresponding relationship curve for different input signals and output signals and the control schemes can be obtained by fitting. Thus, in practical applications, according to the collected input voltage, output voltage and output current of the switching boost circuit, the corresponding control scheme can be directly determined as the target control scheme according to the corresponding relationship curve, so as to control conduction and shutdown of the power semiconductor device.

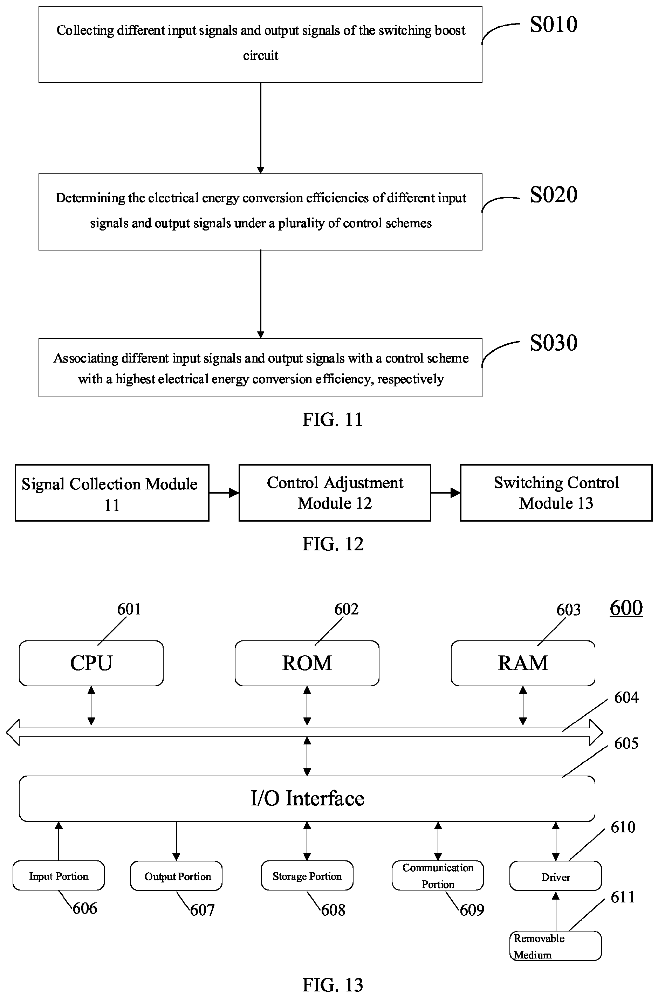

In an optional embodiment, as illustrated in FIG. 11, the step S000 of forming corresponding relationships between different input signals and output signals and the plurality of control schemes specifically includes:

S010: collecting different input signals and output signals of the switching boost circuit;
S020: determining the electrical energy conversion efficiencies of different input signals and output signals under a plurality of control schemes; and
S030: associating different input signals and output signals with a control scheme with a highest electrical energy conversion efficiency, respectively.

Specifically, in the process of pre-forming the corresponding relationships between different input signals and output signals and the plurality of control schemes, it is possible to collect different input signals and output signals of the switching boost circuit in the experimental or historical control process, determine electrical energy conversion efficiencies of different input signals and output signals under a plurality of control schemes, then determine a control scheme with a highest electrical energy conversion efficiency as the target control scheme, and associate different input signals and output signals with the corresponding control scheme with the highest electrical energy conversion efficiency to form the corresponding relationships.

In one or more embodiments, when the electrical energy conversion efficiencies of different input signals and output signals under the plurality of control schemes are to be determined, it is possible to collect the input voltages, the input currents, the output voltages and the output currents of the switching boost circuit under different control schemes in the experimental or historical control process, and determine the electrical energy conversion efficiencies of the switching boost circuit according to the input signals and the output signals of the switching boost circuit.

In other embodiments, when the electrical energy conversion efficiencies of different input signals and output signals under the plurality of control schemes are to be determined, it is also possible to firstly determine the circuit losses of different input signals and output signals under the plurality of control schemes, and then obtain the electrical energy conversion efficiencies according to the circuit losses, the output currents and output voltages in the input signals and output signals. For example, for the boost DCDC circuit of FIG. 2, the circuit losses include an inductor core loss, an inductor winding loss, a switching transistor turn-on loss, a switching transistor turn-off loss, a switching transistor on-state loss, a rectifier diode on-state loss and a rectifier diode switching loss.

Based on the same principle, the embodiment further discloses a circuit control unit. As illustrated in FIG. 12, in the embodiment, the circuit control unit includes a signal collection module 11, a control adjustment module 12 and a switching control module 13.

In which, the signal collection module 11 is configured to collect an input signal and an output signal of the switching boost circuit.

The control adjustment module 12 is configured to determine, according to the input signal, the output signal, and circuit information of the switching boost circuit, a control scheme with a highest electrical energy conversion efficiency as a target control scheme from a plurality of control schemes to be selected, wherein the control schemes to be selected include a control scheme corresponding to each of a plurality of working modes of the switching boost circuit for the at least one power semiconductor device.

The switching control module 13 is configured to control conduction and shutdown of the at least one power semiconductor device according to the target control scheme.

In an optional embodiment, the control adjustment module 12 is specifically configured to calculate, according to the input signal, the output signal and the circuit information of the switching boost circuit, circuit losses of the switching boost circuit under the plurality of control schemes to be selected, wherein the circuit losses include an inductor core loss, an inductor winding loss, a switching transistor turn-on loss, a switching transistor turn-off loss, a switching transistor on-state loss, a rectifier diode on-state loss and a rectifier diode switching loss; determine the electrical energy conversion efficiency of each of the control schemes to be selected according to the circuit loss and the output signal thereof; and determine a control scheme with a highest electrical energy conversion efficiency as a target control scheme from the plurality of control schemes to be selected.

In an optional embodiment, the plurality of working modes include a discontinuous mode and/or a continuous mode.

The control schemes to be selected include a control scheme corresponding to each of the working modes among the discontinuous mode and/or the continuous mode of the switching boost circuit for the at least one power semiconductor device.

The control scheme corresponding to the continuous mode for the at least one power semiconductor device includes a continuous conduction mode control scheme.

The control scheme corresponding to the discontinuous mode for the at least one power semiconductor device includes an N-th valley discontinuous conduction mode control scheme, where N includes at least one positive integer greater than or equal to 1.

In an optional embodiment, when the power of the switching boost circuit is greater than or equal to a first preset power, the plurality of control schemes to be selected include the continuous conduction mode control scheme and the N-th valley discontinuous conduction mode control scheme.

In an optional embodiment, when the power of the switching boost circuit is less than or equal to a second preset power, the plurality of control schemes to be selected include an M-th valley discontinuous conduction mode control scheme, wherein the second preset power is less than the first preset power, and M includes at least one positive integer greater than or equal to a preset value.

In an optional embodiment, the signal collection module 11 is specifically configured to collect an input signal and an output signal of the switching boost circuit at an interval of one or more preset control cycles.

In an optional embodiment, the control adjustment module 12 is further configured to pre-form corresponding relationships between different input signals and output signals and the plurality of control schemes.

In an optional embodiment, the control adjustment module 12 is specifically configured to collect different input signals and output signals of the switching boost circuit; determine the electrical energy conversion efficiencies of different input signals and output signals under a plurality of control schemes; and associate different input signals and output signals with a control scheme with a highest electrical energy conversion efficiency, respectively.

Since the principle for the unit to solve problems is similar to that for the above method, please refer to the implementation of the method for the implementation of the unit, which is not repeated here.

Based on the same principle, the embodiment further discloses a power source apparatus. In the embodiment, the power source apparatus includes a switching boost circuit and the circuit control unit as described in the embodiment.

Since the principle for the apparatus to solve problems is similar to that for the above method, please refer to the implementation of the method for the implementation of the apparatus, which is not repeated here.

The system, apparatus, module or unit set forth in the above embodiments may be implemented by a computer chip or an entity, or by a computer program product having certain functions. A typical implementation device is a computer device. Specifically, the computer device may be, for example, a personal computer, a laptop computer, a cellular phone, a camera phone, a smart phone, a personal digital assistant, a media player, a navigation device, an email device, a game console, a tablet computer, a wearable device or any combination thereof.

In a typical example, a computer device specifically includes a memory, a processor, and a computer program stored in the memory and runnable in the processor, wherein when executing the program, the processor implements the above method performed by a client or a server.

Next, reference is made to FIG. 13, which illustrates a structural diagram of a computer device 600 suitable for implementing an embodiment of the present disclosure.

As illustrated in FIG. 13, the computer device 600 includes a central processing unit (CPU) 601 which may perform various appropriate works and processing according to a program stored in a read-only memory (ROM) 602 or a program loaded into a random-access memory (RAM) 603 from a storage portion 608. The RAM 603 further stores various of programs and data required for operations by the computer device 600. The CPU 601, the ROM 602, and the RAM 603 are connected to each other via a bus 604. An input/output (I/O) interface 605 is also connected to the bus 604.

The following components are connected to the I/O interface 605: an input portion 606 including a keyboard, a mouse, etc.; an output portion 606 including a cathode ray tube (CRT), a liquid crystal feedback (LCD), a speaker, etc.; a storage portion 608 including a hard disk, etc.; and a communication portion 609 including a network interface card such as a LAN card, a modem, etc. The communication portion 609 performs communication processing via a network such as the Internet. A driver 610 is also connected to the I/O interface 605 as needed. A removable medium 611, such as a magnetic disk, an optical disk, a magneto-optical disk, a semiconductor memory, etc., is installed on the driver 610 as needed, so that a computer program read therefrom is installed on the storage portion 608 as required.

Particularly, according to the embodiments of the present disclosure, the procedure described above with reference to the flowchart may be implemented as a computer software program. For example, the embodiment of the present disclosure includes a computer program product including a computer program tangibly embodied on a machine-readable medium, and the computer program includes program codes for performing the method illustrated in the flowchart. In such embodiment, the computer programs may be downloaded and installed from a network via the communication portion 609 and/or installed from the removable medium 611.

A computer-readable medium includes permanent and non-permanent, removable and non-removable media, which can realize the information storage in any method or technique. The information can be computer readable instructions, data structures, program modules or other data. An example of the computer storage medium includes, but not limited to, a phase change memory (PRAM), a static random access memory (SRAM), a dynamic random access memory (DRAM), other types of random access memory (RAM), a read-only memory (ROM), an electrically-erasable programmable read-only memory (EEPROM), a flash memory or other memory techniques, a compact disk read only memory (CD-ROM), a digital versatile disc (DVD) or other optical storages, magnetic cassette tapes, magnetic diskettes or other magnetic storage device or any other non-transmission medium, which can be used for the storage of information accessible to a computing device. According to the definitions herein, the computer readable medium does not include any temporary computer readable media (transitory media), such as modulated data signal and carrier wave.

For the convenience of description, the foregoing apparatus is described by being divided into various units in terms of functions. Of course, the functions of the units may be implemented in one or more pieces of software and/or hardware during the implementation of the present disclosure.

The present disclosure is described with reference to a flowchart and/or a block diagram of the method, device (system) and computer program product according to the embodiments of the present disclosure. It should be appreciated that each flow and/or block in the flowchart and/or the block diagram and a combination of flows and/or blocks in the flowchart and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce means for realizing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device which realizes function(s) specified in one or more flows in the flowchart and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing function(s) specified in one or more flows in the flowchart and/or one or more blocks in the block diagram.

Further to be noted, the term "comprise", "include" or any other variant intends to cover the non-exclusive inclusions, so that a process, a method, a commodity or a device comprising a series of elements comprise not only those elements, but also other elements not explicitly listed, or further comprise inherent elements of such process, method, commodity or device. In a case where there is no further limitation, the elements defined by a sentence "comprising a ..." do not exclude other identical elements existing in the process, method, commodity or device comprising the elements.

Those skilled in the art should appreciate that any embodiment of the present disclosure can be provided as a method, a system or a computer program product. Therefore, the present disclosure can take the form of a full hardware embodiment, a full software embodiment, or an embodiment combining software and hardware. Moreover, the present disclosure can take the form of a computer program product implemented on one or more computer usable storage mediums (including, but not limited to, a magnetic disc memory, CD-ROM, optical storage, etc.) containing therein computer usable program codes.

The present disclosure may be described in the general context of computer executable instructions executed by the computer, e.g., the program module. In general, the program module includes routine, program, object, component, data structure, etc. executing a particular task or realizing a particular abstract data type. The present disclosure may also be put into practice in the distributed computing environments where tasks are executed by remote processing devices connected through a communication network. In the distributed computing environments, the program modules may be located in the local and remote computer storage medium including the storage device.

The embodiments herein are all described in a progressive manner, and the same or similar portions of the embodiments can refer to each other. Each embodiment lays an emphasis on its distinctions from other embodiments. In particular, the system embodiment is simply described since it is substantially similar to the method embodiment, and please refer to the descriptions of the method embodiment for the relevant portion.

Those described above are just embodiments of the present disclosure, rather than limitations thereto. For those skilled in the art, the present disclosure may have various amendments or variations. Any amendment, equivalent substitution, improvement, etc. made under the spirit and principle of the present disclosure should fall within the scope of the claims of the present disclosure.

**Claims**

1. A circuit control method which is applied to a power source apparatus, the power source apparatus comprising a switching boost circuit that comprises at least one power semiconductor device, and the circuit control method comprising:

   collecting an input signal and an output signal of the switching boost circuit;
   determining, according to the input signal, the output signal, and circuit information of the switching boost circuit, a control scheme with a highest electrical energy conversion efficiency as a target control scheme from a plurality of control schemes to be selected, wherein the control schemes to be selected comprise a control scheme corresponding to each of a plurality of working modes of the switching boost circuit for the at least one power semiconductor device; and
   controlling conduction and shutdown of the at least one power semiconductor device according to the target control scheme.

2. The circuit control method according to claim 1, wherein the determining, according to the input signal, the output signal, and circuit information of the switching boost circuit, a control scheme with a highest electrical energy conversion efficiency as a target control scheme from a plurality of control schemes to be selected comprises:

   calculating, according to the input signal, the output signal and the circuit information of the switching boost circuit, circuit losses of the switching boost circuit under the plurality of control schemes to be selected, wherein the circuit losses comprise an inductor core loss, an inductor winding loss, a switching transistor turn-on loss, a switching transistor turn-off loss, a switching transistor on-state loss, a rectifier diode on-state loss and a rectifier diode switching loss;
   determining the electrical energy conversion efficiency of each of the control schemes to be selected according to the circuit loss and the output signal thereof; and
   determining a control scheme with a highest electrical energy conversion efficiency as a target control scheme from the plurality of control schemes to be selected.

3. The circuit control method according to any one of claims 1 and 2, wherein the plurality of working modes comprise a discontinuous mode and/or a continuous mode;

   the control schemes to be selected comprise a control scheme corresponding to each of the working modes among the discontinuous mode and/or the continuous mode of the switching boost circuit for the at least one power semiconductor device;
   the control scheme corresponding to the continuous mode for the at least one power semiconductor device comprises a continuous conduction mode control scheme;
   the control scheme corresponding to the discontinuous mode for the at least one power semiconductor device comprises an N-th valley discontinuous conduction mode control scheme, where N comprises at least one positive integer greater than or equal to 1.

4. The circuit control method according to claim 3, comprising:
   when the power of the switching boost circuit is greater than or equal to a first preset power, the plurality of control schemes to be selected comprise the continuous conduction mode control scheme and the N-th valley discontinuous conduction mode control scheme.

5. The circuit control method according to claim 4, comprising:
   when the power of the switching boost circuit is less than or equal to a second preset power, the plurality of control schemes to be selected comprise an M-th valley discontinuous conduction mode control scheme, wherein the second preset power is less than the first preset power, and M comprises at least one positive integer greater than or equal to a preset value.

6. The circuit control method according to claim 1, wherein collecting an input signal and an output signal of the switching boost circuit comprises:
collecting an input signal and an output signal of the switching boost circuit at an interval of one or more preset control cycles.

7. The circuit control method according to claim 1, comprising: pre-forming corresponding relationships between different input signals and output signals and the plurality of control schemes.

8. A circuit control unit which is applied to a power source apparatus, the power source apparatus comprising a switching boost circuit that comprises at least one power semiconductor device, the circuit control unit comprising:

   a signal collection module configured to collect an input signal and an output signal of the switching boost circuit;
   a control adjustment module configured to determine, according to the input signal, the output signal, and circuit information of the switching boost circuit, a control scheme with a highest electrical energy conversion efficiency as a target control scheme from a plurality of control schemes to be selected, wherein the control schemes to be selected include a control scheme corresponding to each of a plurality of working modes of the switching boost circuit for the at least one power semiconductor device; and
   a switching control module configured to control conduction and shutdown of the at least one power semiconductor device according to the target control scheme.

9. A power source apparatus, comprising a switching boost circuit and the circuit control unit according to claim 8.

10. A computer device, comprising a memory, a processor and a computer program stored in the memory and runnable in the processor, wherein
when executing the program, the processor implements the method according to any one of claims 1 to 7.

11. A computer-readable medium which stores a computer program, wherein
when execute by a processor, the computer program implements the method according to any one of claims 1 to 7.

12. A computer program product, comprising a computer program which, when executed by a processor, implements the method according to any one of claims 1 to 7.

| |
|---|
| Collecting an input signal and an output signal of the switching boost circuit |

S100

| |
|---|
| Determining, according to the input signal, the output signal, and circuit information of the switching boost circuit, a control scheme with a highest electrical energy conversion efficiency as a target control scheme from a plurality of control schemes to be selected, wherein the control schemes to be selected include a control scheme corresponding to each of a plurality of working modes of the switching boost circuit for the at least one power semiconductor device |

S200

| |
|---|
| Controlling conduction and shutdown of the at least one power semiconductor device according to the target control scheme |

S300

FIG. 1

FIG. 2

FIG. 3

FIG. 4

FIG. 5

Calculating, according to the input signal, the output signal and the circuit information of the switching boost circuit, circuit losses of the switching boost circuit under the plurality of control schemes to be selected, wherein the circuit losses include an inductor core loss, an inductor winding loss, a switching transistor turn-on loss, a switching transistor turn-off loss, a switching transistor on-state loss, a rectifier diode on-state loss and a rectifier diode switching loss — S210

Determining the electrical energy conversion efficiency of each of the control schemes to be selected according to the circuit loss and the output signal thereof — S220

Determining a control scheme with a highest electrical energy conversion efficiency as a target control scheme from the plurality of control schemes to be selected — S230

FIG. 6

FIG. 7

FIG. 8

FIG. 9

FIG. 10

17

```
┌─────────────────────────────────────────────────┐        ┌──────
│ Collecting different input signals and output signals of the switching boost │ ─────  S010
│ circuit                                          │        └──────
└─────────────────────────────────────────────────┘
                          │
                          ▼
┌─────────────────────────────────────────────────┐        ┌──────
│ Determining the electrical energy conversion efficiencies of different input │ ─────  S020
│ signals and output signals under a plurality of control schemes │        └──────
└─────────────────────────────────────────────────┘
                          │
                          ▼
┌─────────────────────────────────────────────────┐        ┌──────
│ Associating different input signals and output signals with a control scheme │ ─────  S030
│ with a highest electrical energy conversion efficiency, respectively │        └──────
└─────────────────────────────────────────────────┘
```

FIG. 11

```
┌──────────────────────┐     ┌──────────────────────┐     ┌──────────────────────┐
│ Signal Collection Module │ ──▶ │  Control Adjustment  │ ──▶ │   Switching Control  │
│          11          │     │     Module 12        │     │      Module 13       │
└──────────────────────┘     └──────────────────────┘     └──────────────────────┘
```

FIG. 12

FIG. 13

## INTERNATIONAL SEARCH REPORT

| International application No. |
|---|
| **PCT/CN2023/095345** |

| A. | CLASSIFICATION OF SUBJECT MATTER |
|---|---|

H02M7/217(2006.01)i

According to International Patent Classification (IPC) or to both national classification and IPC

| B. | FIELDS SEARCHED |
|---|---|

Minimum documentation searched (classification system followed by classification symbols)

H02M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电源, 开关, 模式, 效率, 断续, 连续, 谷底, CCM, DCM, 谐振, 功耗, 多模式, power, supply, boost, switch, scheme, resonance

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115333389 A (SHANGHAI ANSHIBO ENERGY TECHNOLOGY CO., LTD.) 11 November 2022 (2022-11-11)<br>  claims 1-12 | 1-12 |
| X | CN 111404361 A (HANGZHOU BIYI MICROELECTRONIC CO., LTD.) 10 July 2020 (2020-07-10)<br>  description, paragraphs 0005-0041, and figures 1-7 | 1-12 |
| X | CN 110086368 A (NANJING UNIVERSITY OF AERONAUTICS AND ASTRONAUTICS) 02 August 2019 (2019-08-02)<br>  description, paragraphs 0008-0044, and figures 1-5 | 1-12 |
| A | CN 104242658 A (WUXI CHIPOWN MICRO-ELECTRONICS LTD.) 24 December 2014 (2014-12-24)<br>  entire document | 1-12 |
| A | CN 107546973 A (NANJING UNIVERSITY OF SCIENCE AND TECHNOLOGY) 05 January 2018 (2018-01-05)<br>  entire document | 1-12 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 June 2023** | **23 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/095345**

### C.    DOCUMENTS CONSIDERED TO BE RELEVANT

| Category* | Citation of document, with indication, where appropriate, of the relevant passages | Relevant to claim No. |
|---|---|---|
| A | WO 2020237864 A1 (GUANGDONG MEDIA REFRIGERATION EQUIPMENT CO., LTD. et al.) 03 December 2020 (2020-12-03)<br>entire document | 1-12 |

Form PCT/ISA/210 (second sheet) (July 2022)

**INTERNATIONAL SEARCH REPORT**
Information on patent family members

International application No.

**PCT/CN2023/095345**

| Patent document cited in search report | | | Publication date (day/month/year) | Patent family member(s) | | | Publication date (day/month/year) |
|---|---|---|---|---|---|---|---|
| CN | 115333389 | A | 11 November 2022 | None | | | |
| CN | 111404361 | A | 10 July 2020 | CN | 212627660 | U | 26 February 2021 |
| CN | 110086368 | A | 02 August 2019 | None | | | |
| CN | 104242658 | A | 24 December 2014 | None | | | |
| CN | 107546973 | A | 05 January 2018 | None | | | |
| WO | 2020237864 | A1 | 03 December 2020 | JP | 2022534301 | A | 28 July 2022 |
| | | | | CN | 112019029 | A | 01 December 2020 |
| | | | | CN | 112019031 | A | 01 December 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210968509X